# DEMANDE DE BREVET EUROPEEN

(11) **EP 0 899 975 A1**
(43) Date de publication de la demande: **03.03.1999**
(21) Numéro de dépôt: 98402103.0
(22) Date de dépôt: 25.08.1998
(51) Int. Cl.: H04Q 7/24, H04Q 7/30, H04Q 7/38

(54) **Réseau de radiocommunication à bornes domestiques équipées d'un convertisseur de signalisation**

(30) Priorité: 27.08.1997 FR 9710705
(71) Demandeur: FRANCE TELECOM, 75015 Paris (FR)
(72) Inventeur: Pailhe, Jean-Bernard, 92250 La Garenne Colombes (FR)
(74) Mandataire: Signore, Robert

(57) **Abrégé**

Selon l'invention, les bornes domestiques (H.B.S.) sont équipées d'un convertisseur (C) apte à simuler une liaison de signalisation entre l'infrastructure du réseau (10) et les terminaux mobiles (PP).

## Description

### Domaine technique

La présente invention a pour objet un réseau de radiocommunication dont les bornes domestiques sont équipées d'un convertisseur de signalisation.

### Etat de la technique antérieure

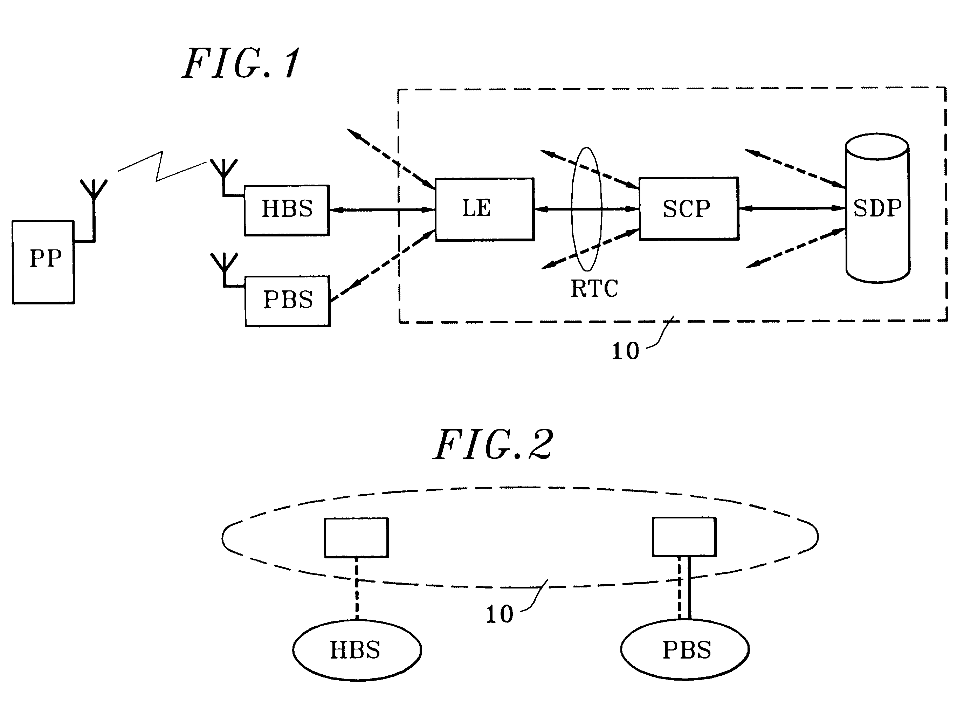

La figure 1 annexée représente un réseau de radiocommunication comprenant, de manière très générale, une infrastructure 10 avec divers moyens comme une base de données d'abonné SDP ("Service Data Point"), un équipement de gestion des communications SCP ("Service Control Point"), un réseau téléphonique commuté RTC, un équipement d'échange local LE ("Local Exchange"). Cette infrastructure est reliée à des bornes soit publiques PBS ("Public Base Station"), soit domestiques (ou privées) HBS ("Home Base Station"). Ces bornes sont en liaison radio avec des terminaux mobiles PP ("Portable Part").

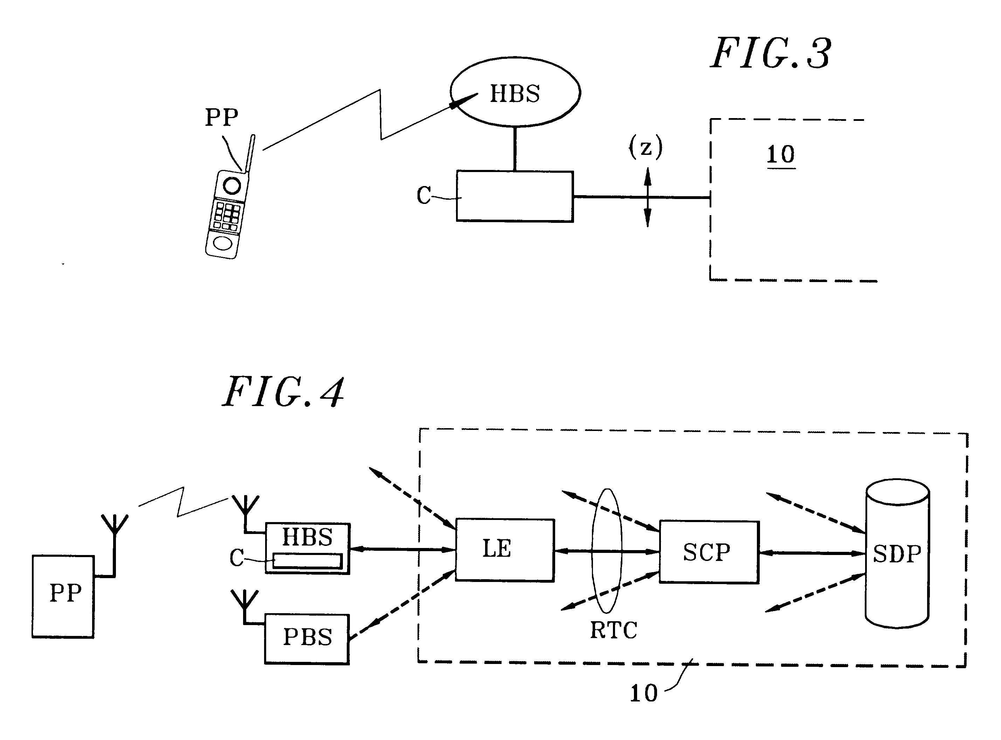

Par bornes "privées", on entend des bornes affectées à une installation relevant d'un organisme ou d'une société particulière et par borne "domestique" une borne affectée à une installation appartenant à une personne ou une famille. On ne fera pas de différence, par la suite, entre borne domestique et borne privée. Les bornes publiques et domestiques sont reliées à l'infrastructure 10 comme il est schématiquement représenté sur la figure 2 annexée. Une borne publique PBS est reliée au réseau par une double liaison, à savoir une liaison de signalisation (en trait plein) et une liaison de phonie (en trait interrompu), alors qu'une borne domestique (ou privée) HBS n'est reliée au réseau que par une liaison de phonie, appelée généralement interface Z et constituée par deux fils conducteurs.

Ce genre de réseau de radiocommunication n'est donc pas parfaitement homogène en ce sens qu'il ne peut pas fonctionner exactement de la même manière selon que le terminal mobile coopère avec une borne publique ou avec une borne domestique. Ainsi, lorsqu'il s'agit d'authentifier un terminal appelant, on peut mettre en oeuvre un procédé d'authentification dite forte, si le terminal coopère avec une borne publique, mais non s'il coopère avec une borne domestique. On sait, en effet, qu'une authentification forte consiste à faire émettre par le réseau un aléa (appelé généralement "RAND", pour "random"), à transmettre cet aléa au terminal, lequel calcule alors une réponse (dite RES pour "response"), à retransmettre cette réponse au réseau qui va vérifier si celle-ci est bien la réponse appropriée. Un tel processus nécessite donc une liaison de signalisation pour la transmission de ces diverses données numériques, ce que possède bien une borne publique mais non une borne domestique. Dans ce dernier cas, on devra se contenter d'une authentification différente, par exemple une authentification dite faible, consistant à faire émettre par le terminal un code secret, généralement à quatre digits, code qui ensuite vérifié par le réseau.

De même, lorsqu'il s'agit de localiser un terminal ou d'identifier un appel au départ, on ne pourra pas procéder indifféremment selon la nature de la borne accessible.

La présente invention a justement pour but de remédier à cet inconvénient.

### Exposé de l'invention

A cette fin, l'invention préconise d'équiper les stations domestiques (ou privées) de moyens simulant une liaison de signalisation, ces moyens comprenant un convertisseur apte à convertir les données provenant de l'infrastructure et destinées aux terminaux mobiles en signaux radio et apte à convertir les signaux radio provenant des terminaux mobiles et destinés à l'infrastructure en signaux analogiques multifréquence DTMF.

Ainsi équipés, les stations domestiques (ou privées), seront aptes à véhiculer elles-aussi les données propres au processus d'authentification forte, pour les appels arrivée, pour les appels départ ou pour la localisation ou l'identification d'un terminal. Que ce dernier coopère avec une borne publique ou une borne domestique (ou privée) devient alors indifférent.

### Brève description des dessins

- la figure 1, déjà décrite, montre un réseau de radiocommunication connu ;
- la figure 2, déjà décrite, montre les liaisons entre le réseau et les stations publiques ou domestiques ;
- la figure 3 illustre l'insertion d'un convertisseur entre les bornes domestiques et le réseau ;
- la figure 4 montre un réseau de radiocommunication perfectionné selon l'invention.

### Exposé détaillé de modes de réalisation

On voit, sur la figure 3, un terminal portable PP en communication radio avec une borne domestique H.B.S., un convertisseur C, et une liaison analogique Z reliée à l'infrastructure 10 du réseau. Le convertisseur reçoit du réseau 10 des informations véhiculées en général selon la norme V23. S'il s'agit d'un processus d'authentification forte, ces informations sont relatives à un numéro d'identification du terminal (noté en général IPUI pour "International Portable User Identity") et un aléa RAND. Le convertisseur convertit le message reçu en signaux radio, lequel est alors transmis vers le terminal approprié via l'antenne de la borne domestique. Le terminal calcule le résultat de l'authentification RES et le transmet à la borne par radio. A la réception de cette information, le convertisseur délivre le résultat en signaux analogiques multifréquence DTMF ("Dual Tone Multi Frequency") sur la ligne analogique. La machine de traitement de service SCP du réseau récupère le résultat RES et demande à la base de donnée SDP qui gère cet abonné de vérifier si cette réponse est correcte. Dans l'affirmative, la requête est satisfaite.

La figure 4 montre le réseau complet. Il se distingue du réseau de la figure 1 par la présence du convertisseur C dans chaque borne domestique H.B.S.

Le flux des informations est schématisé dans le tableau suivant.

| PP (terminal) | | HBS + convertisseur | | SCP |
|---|---|---|---|---|
| | | | | Transmission par V23 d'un RAND pour un usager donné (IPUI) |
| | | Récupération de l'IPUI et du RAND émis en V23 par le réseau conversion vers le terminal avec l'interface radio appropriée | ← | |
| Récupération du RAND et calcul du résultat de l'authentification (RES) | ← | | | |
| Transmission du résultat de l'authentification (RES) | | | | |
| | → | Conversion et transmission du résultat de l'authentification (RES) en DTMF | | |
| | | | → | Réception du résultat de l'authentification du terminal (RES) et comparaison pour vérification |

Le convertisseur C n'est pas nécessairement placé dans la borne. Il peut être placé à l'extérieur de celle-ci.

Dans le cas d'un accès RNIS, les informations de signalisation passe par le canal dit D (ligne de signalisation de 64 kbits).

Le convertisseur n'est pas exclusivement réservé aux processus d'authentification. Il peut être aussi utilisé pour la localisation, pour les appels arrivée, un appel départ afin d'identifier un usager précis. Il permet donc de fournir un service personnalisé à tous les clients dans un environnement domestique.

## Revendications

1. Réseau de radiocommunications comprenant une infrastructure (10), plusieurs bornes publiques (PBS) reliées à l'infrastructure (10) par une liaison de signalisation apte à transmettre des données numériques et par une liaison analogique, plusieurs bornes domestiques (ou privées) (H.B.S.) reliées à l'infrastructure (10) par une ligne analogique, des terminaux mobiles (PP) en liaison radio avec certaines bornes publiques (PBS) et domestiques (ou privées) (HBS), ce réseau étant caractérisé par le fait que les bornes domestiques (ou privées) (H.B.S.) sont équipées de moyens simulant une liaison de signalisation, ces moyens comprenant un convertisseur (C) apte à convertir les données provenant de l'infrastructure (10) et destinées aux terminaux mobiles (PP) en signaux radio et apte à convertir les signaux radio provenant des terminaux mobiles (PP) et destinés à l'infrastructure (10) en signaux analogiques multifréquence (DTMF).

2. Réseau de radiocommunication selon la revendication 1, dans lequel il existe des moyens d'authentification forte d'un terminal, ces moyens étant aptes à émettre vers un terminal mobile (PP) un aléa (RAND), à recevoir la réponse du terminal (RES) et à comparer la réponse reçue à la réponse attendue, ce réseau pouvant ainsi travailler en authentification forte avec tout terminal mobile (PP), que celui-ci coopère avec une borne publique (P.B.S.) ou avec une borne domestique (ou privée) (H.B.S.).

3. Réseau de radiocommunication selon la revendication 1, comprenant en outre des moyens de localisation.

4. Réseau de radiocommunication selon la revendication 1, comprenant en outre des moyens pour identifier un appel arrivée.

5. Réseau de radiocommunication selon la revendication 1, comprenant en outre des moyens pour identifier un appel départ.

6. Réseau de radiocommunication selon la revendication 1, dans lequel il existe des moyens de localisation des appels provenant des terminaux mobiles (PP), cette localisation pouvant ainsi s'effectuer avec tout terminal mobile, que celui-ci coopère avec une borne publique ou avec une borne domestique (ou privée).
